# DEMANDE DE BREVET EUROPEEN

(11) **EP 3 309 732 A1**
(43) Date de publication de la demande: **18.04.2018**
(21) Numéro de dépôt: 17196440.6
(22) Date de dépôt: 13.10.2017
(51) Int. Cl.: G06Q 20/02, G06Q 20/38

(54) **PROCEDE ET SYSTEME DE FOURNITURE DE JETON DANS UN SYSTEME D'EMULATION DE CARTE HOTE COMPORTANT UN PREMIER ET UN SECOND DISPOSITIFS**

(30) Priorité: 14.10.2016 FR 1659972
(71) Demandeur: Idemia Identity & Security France, 92130 Issy-les-Moulineaux (FR)
(72) Inventeur: BAK, Naama, 92130 ISSY-LES-MOULINEAUX (FR); PEPIN, Cyrille, 92100 ISSY-LES-MOULINEAUX (FR); CHAVANEL, Jérôme, 92100 ISSY-LES-MOULINEAUX (FR)
(74) Mandataire: Le Guen-Maillet

(57) **Abrégé**

L'invention concerne un procédé et un système de fourniture de jeton dans un système d'émulation de carte hôte comportant un premier et un second dispositifs et une plateforme de paiement sécurisé, caractérisé en ce que le procédé comporte les étapes de :
- transfert par le second dispositif (20) au premier dispositif (10) d'un identifiant du second dispositif,
- réception par le second dispositif (20), d'un premier jeton et d'un identifiant du second dispositif (20), le premier jeton étant une dérivation symétrique d'un second jeton du premier dispositif (10) avec l'identifiant du second dispositif (20),
- transfert par le second dispositif (20) d'un message comprenant un cryptogramme signé avec le premier jeton, l'identifiant du premier dispositif (10) et une information prédéterminée indiquant que le premier jeton a été transféré par un tiers.

## Description

La présente invention concerne un procédé et un système de fourniture de jeton dans un système d'émulation de carte hôte.

Les dispositifs électroniques aptes à communiquer par l'intermédiaire de liens de télécommunication intègrent aujourd'hui de plus en plus de fonctionnalités.

Par exemple, le paiement par l'intermédiaire d'un téléphone mobile intelligent, bien que pouvant soulever certaines appréhensions, se développe. Pour cela des fonctions d'authentification et de sécurité doivent être utilisées pour les transactions financières à partir de téléphones mobiles intelligents.

Le paiement par l'intermédiaire d'un téléphone mobile intelligent ou par l'intermédiaire de tout autre dispositif électronique apte à communiquer par l'intermédiaire d'un lien de télécommunication est une fonctionnalité qui tend à se développer dans le futur. Les fonctions d'authentification et de sécurité sont adaptées pour remplacer les cartes classiques, telles que les cartes de crédit, cartes de débit, cartes de fidélité, cartes de transport, etc.

Le téléphone mobile intelligent se dote aujourd'hui d'un portefeuille et permet aujourd'hui le paiement sans contact (NFC acronyme de « Near Field Communication ») par le biais de provisionnement des informations spécifiques de compte dans un domaine sécurisé du téléphone mobile intelligent.

Récemment, l'émulation de carte hôte ou « Host Card Emulation (HCE) » en anglais a été proposé et mis en oeuvre pour permettre de telles transactions bancaires.

HCE Service fournit non seulement le produit mais aussi le service, y compris une infrastructure de gestion des transactions à distance dématérialisée.

Un mécanisme de gestion de jetons permet d'effectuer des paiements avec un téléphone mobile compatible NFC pour communiquer avec un terminal de paiement compatible avec la norme EMV-sans contact.

Les jetons sont transmis et stockés de manière sécurisée dans le téléphone mobile. Ces jetons sont utilisés pour authentifier l'utilisateur et l'appareil, ainsi que pour sécuriser la transmission. Les jetons contiennent les informations nécessaires au paiement sans contact via l'interface NFC du téléphone mobile intelligent.

Un dispositif électronique apte à communiquer par l'intermédiaire d'un lien de télécommunication est, par exemple, un téléphone mobile intelligent qui dispose d'un nombre limité de jetons. Dans certains cas, il n'est pas possible pour l'utilisateur du téléphone mobile intelligent d'obtenir de nouveaux jetons lorsqu'il ne dispose plus de jetons. Ceci est par exemple le cas lorsque celui-ci est dans une zone dans laquelle l'accès à un réseau de télécommunication n'est pas possible. Il devient alors impossible d'effectuer des transactions bancaires avec le téléphone mobile intelligent.

La présente invention a pour but de résoudre les problèmes de l'état de la technique en proposant un procédé et un système qui permettent à un dispositif d'effectuer des transactions bancaires dans un système HCE par un dispositif ne disposant pas de jetons.

A cette fin, selon un premier aspect, l'invention propose un procédé de fourniture de jeton dans un système d'émulation de carte hôte comportant un premier et un second dispositifs et une plateforme de paiement sécurisé, caractérisé en ce que le procédé comporte les étapes de :
- transfert par le second dispositif au premier dispositif d'un identifiant du second dispositif et/ou de l'utilisateur du second dispositif,
- réception du premier dispositif par le second dispositif, d'un premier jeton et d'un identifiant du second dispositif et/ou de l'utilisateur du second dispositif, le premier jeton étant une dérivation symétrique d'un second jeton du premier dispositif avec l'identifiant du second dispositif et/ou de l'utilisateur du second dispositif,
- transfert par le second dispositif d'un message comprenant un cryptogramme signé avec le premier jeton, l'identifiant du premier dispositif et/ou de l'utilisateur du premier dispositif et une information prédéterminée indiquant que le premier jeton a été transféré par un tiers,
- réception par la plateforme de paiement dématérialisée du message,
- obtention par la plateforme de paiement dématérialisée d'informations relatives au premier dispositif et/ou de l'utilisateur du premier dispositif pour la génération d'un troisième jeton du premier dispositif,
- génération par la plateforme dématérialisée d'un cryptogramme en effectuant une dérivation de clé symétrique du troisième jeton généré par la plateforme dématérialisée avec l'identifiant du second dispositif (20) et/ou de l'utilisateur du second dispositif,
- acceptation de la transaction bancaire si les cryptogrammes sont identiques.

L'invention concerne aussi un système de fourniture de jeton dans un système d'émulation de carte hôte comportant un premier et un second dispositifs et une plateforme de paiement sécurisé, caractérisé en ce que le système comporte :
- des moyens de transfert par le second dispositif au premier dispositif d'un identifiant du second dispositif et/ou de l'utilisateur du second dispositif,
- des moyens de réception du premier dispositif par le second dispositif, d'un premier jeton et d'un identifiant du second dispositif et/ou de l'utilisateur du second dispositif, le premier jeton étant une dérivation symétrique d'un second jeton du premier dispositif avec l'identifiant du second dispositif et/ou de l'utilisateur du second dispositif,
- des moyens de transfert par le second dispositif d'un message comprenant un cryptogramme signé avec le premier jeton, l'identifiant du premier dispositif et/ou de l'utilisateur du premier dispositif et une information prédéterminée indiquant que le premier jeton a été transféré par un tiers,
- des moyens de réception par la plateforme de paiement dématérialisée du message,
- des moyens d'obtention par la plateforme de paiement dématérialisée d'informations relatives au premier dispositif et/ou de l'utilisateur du premier dispositif pour la génération d'un troisième jeton du premier dispositif,
- des moyens de génération par la plateforme dématérialisée d'un cryptogramme en effectuant une dérivation de clé symétrique du troisième jeton généré par la plateforme dématérialisée avec l'identifiant du second dispositif et/ou de l'utilisateur du second dispositif,
- des moyens d'acceptation de la transaction bancaire si les cryptogrammes sont identiques.

Ainsi, un dispositif peut effectuer des transactions bancaires dans un système HCE même s'il ne dispose pas de jetons.

Selon un mode particulier de l'invention, le message comprenant le cryptogramme signé avec le premier jeton est transféré à un terminal de point de vente qui interroge un serveur d'un établissement bancaire qui interroge à son tour la plateforme de paiement dématérialisé afin de vérifier le cryptogramme.

Selon un mode particulier de l'invention, l'information prédéterminée indiquant que le premier jeton a été transféré par un tiers indique en outre que le compte de l'utilisateur du second dispositif doit être débité.

Selon un mode particulier de l'invention, l'information prédéterminée indiquant que le premier jeton a été transféré par un tiers indique en outre que le compte de l'utilisateur du second dispositif doit être débité et que le compte de l'utilisateur du premier dispositif doit être crédité.

Selon un mode particulier de l'invention, l'information prédéterminée indiquant que le premier jeton a été transféré par un tiers indique en outre le montant de débit et du crédit.

Selon un mode particulier de l'invention, le procédé comporte entre l'étape, exécutée préalablement à l'étape de transfert par le second dispositif au premier dispositif d'un identifiant du second dispositif et/ou de l'utilisateur du second dispositif, de création d'un canal sécurisé entre le premier et le second dispositif et en ce que l'identifiant du second dispositif et le premier jeton sont transférés dans le canal sécurisé.

Selon un mode particulier de l'invention, les premiers et seconds dispositifs sont des téléphones mobiles intelligents.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système d'émulation de carte hôte avec transfert de jetons dans lequel la présente invention est implémentée ;
la Fig. 2 représente un exemple d'architecture d'un premier dispositif dans lequel la présente invention est implémentée ;
la Fig. 3 représente un exemple d'architecture d'un second dispositif dans lequel la présente invention est implémentée ;
la Fig. 4 représente un exemple d'architecture d'une plateforme de paiement dématérialisé dans lequel la présente invention est implémentée ;
la Fig. 5a représente un exemple d'algorithme exécuté par le second dispositif selon un premier mode de réalisation de la présente invention ;
la Fig. 5b représente un exemple d'algorithme exécuté par le premier dispositif selon le premier mode de réalisation de la présente invention ;
la Fig. 5c représente un exemple d'algorithme exécuté par la plateforme de paiement dématérialisé selon le premier mode de réalisation de la présente invention ;
la Fig. 6a représente un exemple d'algorithme exécuté par le premier dispositif selon un second mode de réalisation de la présente invention ;
la Fig. 6b représente un exemple d'algorithme exécuté par le second dispositif selon le second mode de réalisation de la présente invention ;
la Fig. 6c représente un exemple d'algorithme exécuté par la plateforme de paiement dématérialisé selon le second mode de réalisation de la présente invention ;
la Fig. 7a représente un exemple d'algorithme exécuté par le premier dispositif selon un troisième mode de réalisation de la présente invention ;
la Fig. 7b représente un exemple d'algorithme exécuté par le second dispositif selon le troisième mode de réalisation de la présente invention ;
la Fig. 7c représente un exemple d'algorithme exécuté par la plateforme de paiement dématérialisé selon le troisième mode de réalisation de la présente invention.

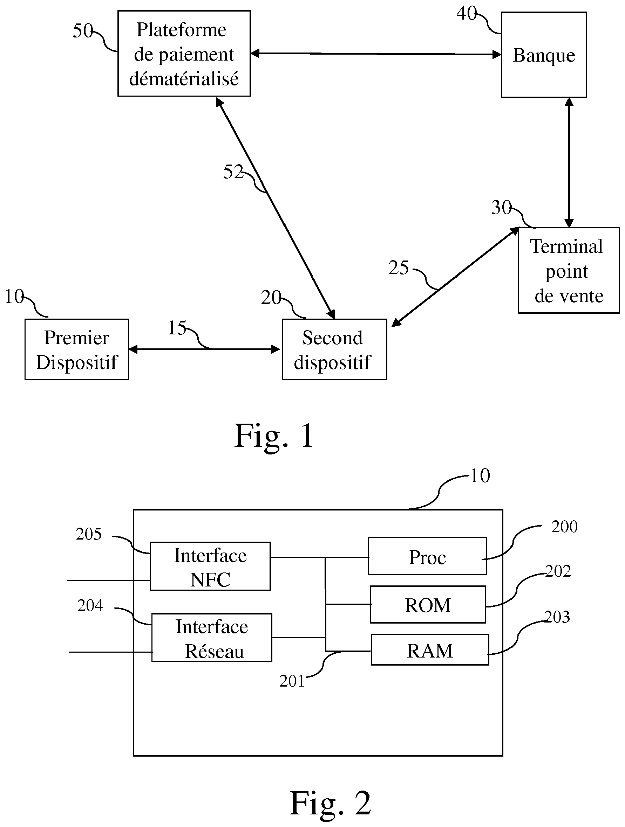

La **Fig. 1** représente un système de transfert de jetons d'émulation de carte hôte dans lequel la présente invention est implémentée.

Un système de paiement basé sur l'émulation de carte comporte classiquement au moins un premier dispositif 10, un terminal de point de vente 30, un organisme financier tel qu'une banque 40 et une plateforme de paiement dématérialisé 50.

Classiquement, lorsqu'un utilisateur du premier dispositif 10, tel que par exemple un téléphone mobile intelligent, désire effectuer un paiement auprès d'un terminal de point de vente 30 à l'aide du premier dispositif 10 conformément au système d'émulation de carte, l'utilisateur du premier dispositif 10 transfère un cryptogramme signé par un jeton au terminal de point de vente 30. Le terminal de point de vente interroge un serveur 40 de la banque de l'utilisateur du premier dispositif 10 qui interroge à son tour une plateforme de paiement dématérialisé 50 afin de vérifier l'intégrité des données. Si la vérification s'avère positive, la transaction est validée.

Selon un premier mode de réalisation de la présente invention, lorsque l'utilisateur du second dispositif 20 ne dispose plus de jeton et ne peut pas en obtenir, celui-ci obtient du premier dispositif 10 un jeton 15 et effectue le paiement 25 auprès du terminal de point de vente 30 à l'aide du second dispositif 20. Le premier dispositif 10 est par exemple un téléphone mobile intelligent d'un ami ou un membre de sa famille. Le second dispositif est par exemple un téléphone mobile intelligent.

Un jeton selon l'invention permet d'authentifier l'utilisateur, le second dispositif et les informations pour effectuer la transaction comme par exemple le montant de la transaction.

Le jeton est plus sûr qu'une simple authentification de l'utilisateur.

Selon un second mode de réalisation de la présente invention, lorsque l'utilisateur du premier dispositif 10 souhaite transférer une somme d'argent à un ami ou un membre de sa famille, l'utilisateur du premier dispositif 10 transfère un jeton 15 avec le montant de la somme d'argent au second dispositif 20 qui transfère un cryptogramme 52 signé par le jeton à la plateforme de paiement dématérialisé 50 qui vérifie l'intégrité des données du cryptogramme pour validation du transfert d'argent par la banque 40 de l'utilisateur du premier dispositif 10. Le second dispositif 20 est par exemple un téléphone mobile intelligent d'un ami ou un membre de sa famille.

Le premier dispositif est par exemple un téléphone mobile intelligent.

Selon un troisième mode de réalisation de la présente invention, lorsque l'utilisateur du premier dispositif 10 souhaite valider un paiement pour un dispositif 20 ne disposant pas de jeton, l'utilisateur du premier dispositif 10 transfère un jeton 15 au second dispositif 20 qui transfère un cryptogramme 52 signé par le jeton à la plateforme de paiement dématérialisé 50 qui vérifie l'intégrité des données du jeton pour validation du transfert d'argent par la banque 40 de l'utilisateur du premier dispositif 10. Le second dispositif 20 est par exemple un téléviseur, une passerelle domestique reliée à un téléviseur.

Le premier dispositif est par exemple un téléphone mobile intelligent.

La **Fig. 2** représente un exemple d'architecture d'un premier dispositif dans lequel la présente invention est implémentée.

Le premier dispositif 10 comprend :
- un processeur, micro-processeur, ou microcontrôleur 200 ;
- une mémoire volatile 203 ;
- une mémoire non volatile 202;
- une interface NFC 205 ;
- une interface réseau de communication cellulaire 204 ;
- un bus de communication 201 reliant le processeur 200 à la mémoire ROM 202, à la mémoire RAM 203, à l'interface NFC 205 et à l'interface réseau de communication cellulaire 204.

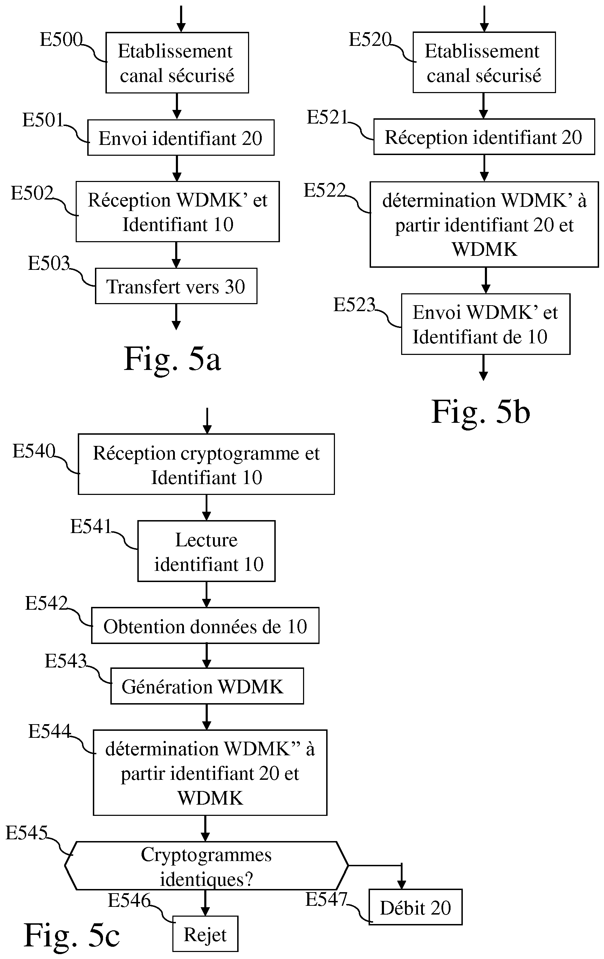

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le premier dispositif 10 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec les Figs. 5b et/ou 6a et/ou 7a.

Tout ou partie du procédé décrit en relation avec les Figs. 5b et/ou 6a et/ou 7a peut être implémenté sous forme logicielle par exécution d'un ensemble d'instructions par une machine programmable, tel qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC (« *Application Specific Integrated Circuit »* en anglais ou *Circuit Intégré Spécifique à une Application* en français).

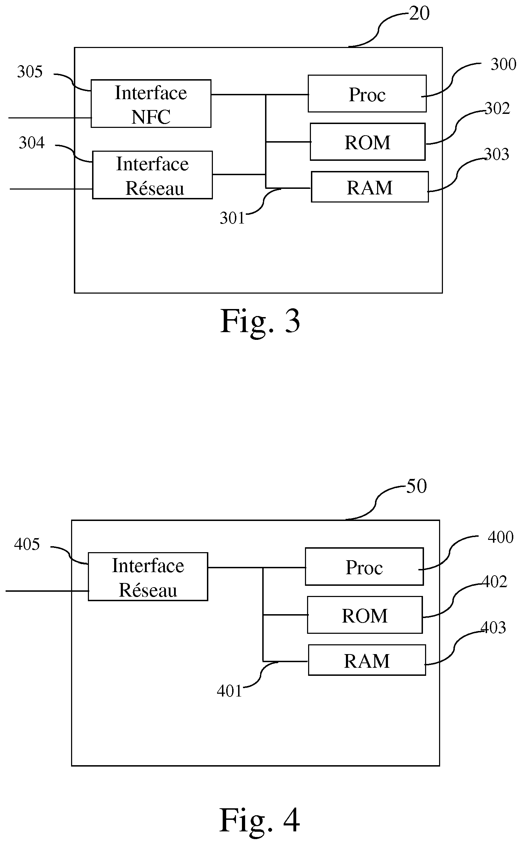

La Fig. 3 représente un exemple d'architecture d'un second dispositif dans lequel la présente invention est implémentée.

Le second dispositif 20 comprend :
- un processeur, micro-processeur, ou microcontrôleur 300 ;
- une mémoire volatile 303 ;
- une mémoire non volatile 302;
- une interface NFC 305 ;
- une interface réseau de communication cellulaire 304 ;
- un bus de communication 301 reliant le processeur 300 à la mémoire ROM 302, à la mémoire RAM 303, à l'interface NFC 305 et à l'interface réseau de communication cellulaire 304.

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le second dispositif 20 est mis sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec les Figs. 5a et/ou 6b et/ou 7b.

Tout ou partie du procédé décrit en relation avec les Figs. 5a et/ou 6b et/ou 7b peut être implémenté sous forme logicielle par exécution d'un ensemble d'instructions par une machine programmable, tel qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC *(« Application Specific Integrated Circuit »* en anglais ou *Circuit Intégré Spécifique à une Application* en français).

La **Fig. 4** représente un exemple d'architecture d'une plateforme de paiement dématérialisé dans lequel la présente invention est implémentée.

La plateforme de paiement dématérialisée 50 comprend :
- un processeur, micro-processeur, ou microcontrôleur 400 ;
- une mémoire volatile 403 ;
- une mémoire non volatile 402;
- une interface réseau filaire et/ou cellulaire 405 ;
- un bus de communication 401 reliant le processeur 400 à la mémoire ROM 402, à la mémoire RAM 403 et à l'interface réseau 405.

Le processeur 400 est capable d'exécuter des instructions chargées dans la mémoire volatile 403 à partir de la mémoire non volatile 402, d'une mémoire externe (non représentée), d'un support de stockage, tel qu'une carte SD ou autre, ou d'un réseau de communication. Lorsque la plateforme de paiement dématérialisée 50 est mise sous tension, le processeur 400 est capable de lire de la mémoire volatile 403 des instructions et de les exécuter. Ces instructions forment un programme d'ordinateur qui cause la mise en oeuvre, par le processeur 400, de tout ou partie du procédé décrit en relation avec les Figs. 5c et/ou 6c et/ou 7c.

Tout ou partie du procédé décrit en relation avec les Figs. 5c et/ou 6c et/ou 7c peut être implémenté sous forme logicielle par exécution d'un ensemble d'instructions par une machine programmable, tel qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC (« *Application Specific Integrated Circuit »* en anglais ou *Circuit Intégré Spécifique à une Application* en français).

La **Fig. 5a** représente un exemple d'algorithme exécuté par le second dispositif selon un premier mode de réalisation de la présente invention.

Lorsque l'utilisateur du second dispositif 20 souhaite recevoir un jeton d'un tiers disposant du premier dispositif 10, celui-ci commande le dispositif 20 pour l'établissement à l'étape E500 d'un canal sécurisé entre les premier et second dispositifs 10 et 20 par exemple par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E501, au moins un identifiant du second dispositif 20 et/ou de l'utilisateur du dispositif 20 est transféré au premier dispositif 10 par l'intermédiaire du canal sécurisé.

A l'étape E502, un jeton noté WDMK' ainsi qu'au moins un identifiant du premier dispositif 10 et/ou de l'utilisateur du premier dispositif 10 est reçu par l'intermédiaire du canal sécurisé.

A l'étape E503, un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré au terminal de point de vente 30 pour effectuer un paiement.

Le message comprend un champ de données d'application de la banque qui comporte une information prédéterminée indiquant que le jeton WDMK' a été transféré par un tiers, en l'occurrence l'utilisateur du second dispositif 20 dans l'exemple présent. L'information prédéterminée indique aussi que le compte bancaire de l'utilisateur du second dispositif 20 doit être débité.

Le terminal de point de vente 30 interroge un serveur 40 de la banque de l'utilisateur du dispositif 20 qui interroge à son tour une plateforme de paiement dématérialisé 50 afin de vérifier l'intégrité des données.

La **Fig. 5b** représente un exemple d'algorithme exécuté par le premier dispositif selon le premier mode de réalisation de la présente invention.

Lorsque l'utilisateur du premier dispositif 10 souhaite transférer un jeton à un tiers disposant du second dispositif 20, celui-ci commande le dispositif 10 pour l'établissement à l'étape E520 d'un canal sécurisé entre les premier et second dispositifs 10 et 20 par exemple par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E521, le premier dispositif 10 reçoit du second dispositif 20 au moins un identifiant du second dispositif 20 et/ou de l'utilisateur du second dispositif 20 par l'intermédiaire du canal sécurisé.

A l'étape E522, le premier dispositif 10 détermine, à partir d'un jeton WDMK dont il dispose, un nouveau jeton WDMK' en effectuant une dérivation de clé symétrique du jeton WDMK avec l'identifiant du second dispositif 20 et/ou de l'utilisateur du second dispositif 20.

Par exemple, le premier dispositif 10 fait une dérivation de clé 3DES en prenant comme paramètres l'identifiant du second dispositif 20 ainsi que les données de la transaction si elles sont fournies.

A l'étape E523, le premier dispositif 10 commande le transfert du jeton WDMK' par l'intermédiaire du canal sécurisé au second dispositif 20.

La **Fig. 5c** représente un exemple d'algorithme exécuté par la plateforme de paiement dématérialisé selon le premier mode de réalisation de la présente invention.

A l'étape E540, la plateforme de paiement dématérialisé 50 reçoit d'un terminal de point de vente 30 par l'intermédiaire du serveur 40 un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré au terminal de point de vente 30 pour effectuer un paiement.

Le message comprend un champ de données d'application de la banque qui comporte une information prédéterminée indiquant que le jeton WDMK' a été transféré par un tiers, en l'occurrence l'utilisateur du second dispositif 20 dans l'exemple présent. L'information prédéterminée indique aussi que le compte bancaire de l'utilisateur du second dispositif 20 doit être débité.

A l'étape E541, la plateforme de paiement dématérialisé 50 lit l'identifiant du premier dispositif 10 et/ou de l'utilisateur du premier dispositif 10 ainsi que l'information prédéterminée indiquant que le jeton WDMK' a été transféré par un tiers et que le compte bancaire de l'utilisateur du second dispositif 20 doit être débité.

A l'étape E542, la plateforme de paiement dématérialisé 50 interroge une base de données comprenant des informations relatives au premier dispositif 10 et/ou à l'utilisateur du premier dispositif 10.

Les informations relatives au premier dispositif 10 et/ou à l'utilisateur du premier dispositif 10 permettent d'obtenir les informations nécessaires à la génération du jeton WMDK du premier dispositif 10 et/ou de l'utilisateur du premier dispositif 10.

A l'étape E543, la plateforme de paiement dématérialisé 50 génère un jeton WDMK à partir des informations obtenues de la base de données.

A l'étape E544, la plateforme de paiement dématérialisé 50 détermine à partir du jeton WDMK générée à l'étape E543 un jeton WDMK' en effectuant une dérivation de clé symétrique du jeton WDMK avec l'identifiant du second dispositif 20 et/ou de l'utilisateur du second dispositif 20.

A l'étape E545, la plateforme de paiement dématérialisé 50 vérifie si le cryptogramme reçu et signé avec le jeton WDMK' et le cryptogramme signé avec le jeton WDMK" sont identiques.

Si les cryptogrammes sont identiques, la transaction est validée à l'étape E547 et le compte de l'utilisateur du second dispositif 20 est débité.

Si les cryptogrammes sont différents, la transaction est rejetée à l'étape E546.

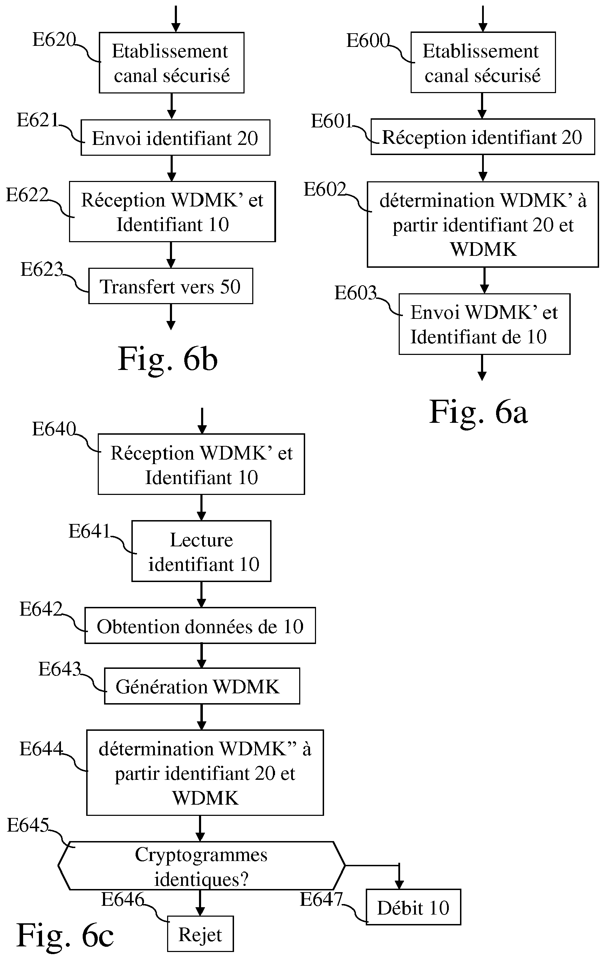

La **Fig. 6a** représente un exemple d'algorithme exécuté par le premier dispositif selon un second mode de réalisation de la présente invention.

Lorsque l'utilisateur du premier dispositif 10 souhaite verser un somme d'argent à un tiers disposant du second dispositif 20, celui-ci commande le dispositif 10 pour l'établissement à l'étape E600 d'un canal sécurisé entre les premier et second dispositifs 10 et 20 par exemple par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E601, le premier dispositif 10 reçoit du second dispositif 20 au moins un identifiant du second dispositif 20 et/ou de l'utilisateur du second dispositif 20 par l'intermédiaire du canal sécurisé.

A l'étape E602, le premier dispositif 20 détermine à partir d'un jeton WDMK qu'il dispose un nouveau jeton WDMK' en effectuant une dérivation de clé symétrique du jeton WDMK avec l'identifiant du second dispositif 20 et/ou de l'utilisateur du second dispositif 20.

A l'étape E603, le premier dispositif 10 commande le transfert du jeton WDMK' par l'intermédiaire du canal sécurisé au second dispositif 20 ainsi que l'identifiant du premier dispositif 10 et/ou de l'utilisateur du premier dispositif 10.

La **Fig. 6b** représente un exemple d'algorithme exécuté par le second dispositif selon le second mode de réalisation de la présente invention.

Lorsque l'utilisateur du second dispositif 20 souhaite recevoir une somme d'argent d'un tiers disposant du premier dispositif 10, celui-ci commande le second dispositif 20 pour l'établissement à l'étape E620 d'un canal sécurisé entre les premier et second dispositifs 10 et 20 par exemple par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E621, au moins un identifiant du second dispositif 20 et/ou de l'utilisateur du second dispositif 20 est transféré au dispositif 10 par l'intermédiaire du canal sécurisé.

A l'étape E622, un jeton noté WDMK' ainsi qu'au moins un identifiant du premier dispositif 10 et/ou de l'utilisateur du premier dispositif 10 est reçu par l'intermédiaire du canal sécurisé.

A l'étape E623, un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré à la plateforme de paiement dématérialisé 50.

Le message comprend un champ de données d'application de la banque qui comporte une information prédéterminée indiquant que le jeton WDMK' a été transféré par un tiers, en l'occurrence l'utilisateur du premier dispositif 10 dans l'exemple présent. L'information prédéterminée indique aussi que le compte bancaire de l'utilisateur du second dispositif 20 doit être débité et que le compte bancaire de l'utilisateur du second dispositif 20 doit être crédité et, éventuellement, le montant à créditer et débiter.

La **Fig. 6c** représente un exemple d'algorithme exécuté par la plateforme de paiement dématérialisé selon le second mode de réalisation de la présente invention.

A l'étape E640, la plateforme de paiement dématérialisé 50 reçoit du second dispositif 20 un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré à la plateforme de paiement dématérialisé 50.

Le message comprend un champ de données d'application de la banque qui comporte une information prédéterminée indiquant que le jeton WDMK' a été transféré par un tiers, en l'occurrence l'utilisateur du premier dispositif 10 dans l'exemple présent. L'information prédéterminée indique aussi que le compte bancaire de l'utilisateur du second dispositif 20 doit être débité et que le compte bancaire de l'utilisateur du second dispositif 20 doit être crédité et, éventuellement, le montant à créditer et débiter.

A l'étape E641, la plateforme de paiement dématérialisé 50 lit l'identifiant du premier dispositif 10 et/ou de l'utilisateur du premier dispositif 10.

A l'étape E642, la plateforme de paiement dématérialisé 50 interroge une base de données comprenant des informations relatives au premier dispositif 10 et/ou à l'utilisateur du premier dispositif 10.

Les informations relatives au premier dispositif 10 et/ou à l'utilisateur du premier dispositif 10 permettent d'obtenir les informations nécessaires à la génération du jeton WMDK.

A l'étape E643, la plateforme de paiement dématérialisé 50 génère le jeton WDMK à partir des informations obtenues de la base de données.

A l'étape E644, la plateforme de paiement dématérialisé 50 détermine à partir du jeton WDMK générée à l'étape E643 un jeton WDMK" en effectuant une dérivation de clé symétrique du jeton WDMK avec l'identifiant du second dispositif 20 et/ou de l'utilisateur du second dispositif 20.

A l'étape E645, la plateforme de paiement dématérialisé 50 vérifie si le cryptogramme reçu et signé avec le jeton WDMK' et le cryptogramme signé avec le jeton WDMK" sont identiques.

Si les cryptogrammes sont identiques, la transaction est validée à l'étape E647 et le compte de l'utilisateur du premier dispositif 10 est débité tandis que le compte de l'utilisateur du second dispositif 20 est crédité.

Si les cryptogrammes sont différents, la transaction est rejetée à l'étape E646.

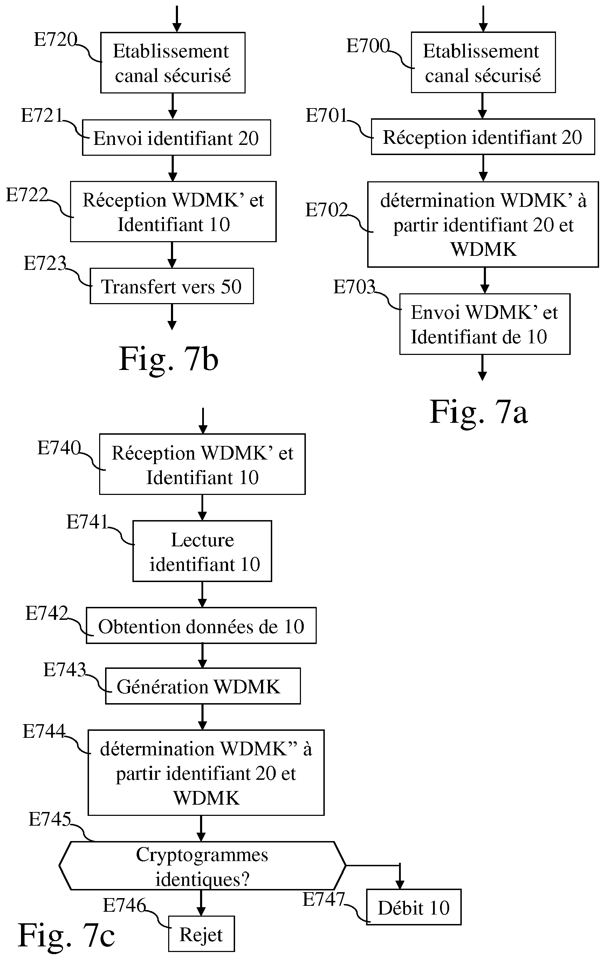

La **Fig. 7a** représente un exemple d'algorithme exécuté par le premier dispositif selon un troisième mode de réalisation de la présente invention.

Lorsque l'utilisateur du premier dispositif 10 souhaite effectuer un paiement pour un service accessible par l'intermédiaire du second dispositif 20, celui-ci commande le dispositif 10 pour l'établissement à l'étape E700 d'un canal sécurisé entre les premier et second dispositifs 10 et 20 par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E701, le premier dispositif 10 reçoit du second dispositif 20 au moins un identifiant du second dispositif 20 et/ou de l'utilisateur du second dispositif 20 par l'intermédiaire du canal sécurisé.

A l'étape E702, le premier dispositif 10 détermine, à partir d'un jeton WDMK qu'il dispose, un nouveau jeton WDMK' en effectuant une dérivation de clé symétrique du jeton WDMK avec l'identifiant du second dispositif 20 et/ou de l'utilisateur du second dispositif 20.

A l'étape E703, le premier dispositif 10 commande le transfert du jeton WDMK' par l'intermédiaire du canal sécurisé au second dispositif 20 ainsi que l'identifiant du premier dispositif 10 et/ou de l'utilisateur du premier dispositif 10.

La **Fig. 7b** représente un exemple d'algorithme exécuté par le second dispositif selon le troisième mode de réalisation de la présente invention.

Lorsque l'utilisateur du premier dispositif 10 souhaite effectuer un paiement pour un service accessible par l'intermédiaire du second dispositif 20, celui-ci commande le second dispositif 20 pour l'établissement à l'étape E720 d'un canal sécurisé entre les premier et second dispositifs 10 et 20 par l'intermédiaire des interfaces NFC 205 et 305 ou des interfaces 204 et 304.

Le canal sécurisé est par exemple basé sur le partage d'une même clé symétrique pour ouvrir une session sécurisée de type SCP02 ou SCP03.

A l'étape E721, au moins un identifiant du second dispositif 20 et/ou de l'utilisateur du second dispositif 20 est transféré au premier dispositif 10 par l'intermédiaire du canal sécurisé.

A l'étape E722, un jeton noté WDMK' ainsi qu'au moins un identifiant du premier dispositif 10 et/ou de l'utilisateur du premier dispositif 10 est reçu par l'intermédiaire du canal sécurisé.

A l'étape E723, un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré à la plateforme de paiement dématérialisé 50.

Le message comprend un champ de données d'application de la banque qui comporte une information prédéterminée indiquant que le jeton WDMK' a été transféré par un tiers, en l'occurrence l'utilisateur du premier dispositif 10 dans l'exemple présent. L'information prédéterminée indique aussi que le compte bancaire de l'utilisateur du second dispositif 20 doit être débité.

La **Fig. 7c** représente un exemple d'algorithme exécuté par la plateforme de paiement dématérialisé selon le troisième mode de réalisation de la présente invention.

A l'étape E740, la plateforme de paiement dématérialisé 50 reçoit du second dispositif 20 un message comprenant un cryptogramme signé par le jeton noté WDMK', l'identifiant du second dispositif 20 et/ou de l'utilisateur du second dispositif 20 ainsi que l'identifiant du premier dispositif 10 et/ou de l'utilisateur du premier dispositif 10 est transféré à la plateforme de paiement dématérialisé 50.

Le message comprend un champ de données d'application de la banque qui comporte une information prédéterminée indiquant que le jeton WDMK' a été transféré par un tiers, en l'occurrence l'utilisateur du premier dispositif 10 dans l'exemple présent. L'information prédéterminée indique aussi que le compte bancaire de l'utilisateur du second dispositif 20 doit être débité.

A l'étape E741, la plateforme de paiement dématérialisé 50 lit l'identifiant du premier dispositif 10 et/ou de l'utilisateur du premier dispositif 10.

A l'étape E742, la plateforme de paiement dématérialisé 50 interroge une base de données comprenant des informations relatives au premier dispositif 10 et/ou à l'utilisateur du premier dispositif 10.

Les informations relatives au premier dispositif 10 et/ou à l'utilisateur du premier dispositif 10 permettent d'obtenir les informations nécessaires à la génération du jeton WMDK.

A l'étape E743, la plateforme de paiement dématérialisé 50 génère un jeton WDMK à partir des informations obtenues de la base de données.

A l'étape E744, la plateforme de paiement dématérialisé 50 détermine à partir du jeton WDMK généré à l'étape E743 un jeton WDMK" en effectuant une dérivation de clé symétrique du jeton WDMK avec l'identifiant du second dispositif 20 et/ou de l'utilisateur du second dispositif 20.

A l'étape E745, la plateforme de paiement dématérialisé 50 vérifie si le cryptogramme reçu et signé avec le jeton WDMK' et le cryptogramme signé avec le jeton WDMK" sont identiques.

Si les cryptogrammes sont identiques, la transaction est validée à l'étape E6747 et le compte de l'utilisateur du premier dispositif 10 est débité.

Si les cryptogrammes sont différents, la transaction est rejetée à l'étape E746.

Bien entendu, la présente invention n'est nullement limitée aux modes de réalisation décrits ici, mais englobe, bien au contraire, toute variante à la portée de l'homme du métier.

## Revendications

1. Procédé de fourniture de jeton dans un système d'émulation de carte hôte comportant un premier et un second dispositifs et une plateforme de paiement sécurisé, **caractérisé en ce que** le procédé comporte les étapes de :
- transfert par le second dispositif (20) au premier dispositif (10) d'un identifiant du second dispositif (20) et/ou de l'utilisateur du second dispositif (20),
- réception du premier dispositif (10) par le second dispositif (20), d'un premier jeton et d'un identifiant du second dispositif (20) et/ou de l'utilisateur du second dispositif (20), le premier jeton étant une dérivation symétrique d'un second jeton du premier dispositif (10) avec l'identifiant du second dispositif (20) et/ou de l'utilisateur du second dispositif (20),
- transfert par le second dispositif (20) d'un message comprenant un cryptogramme signé avec le premier jeton, l'identifiant du premier dispositif (10) et/ou de l'utilisateur du premier dispositif (10) et une information prédéterminée indiquant que le premier jeton a été transféré par un tiers,
- réception par la plateforme de paiement dématérialisée du message,
- obtention par la plateforme de paiement dématérialisée d'informations relatives au premier dispositif (10) et/ou de l'utilisateur du premier dispositif (10) pour la génération d'un troisième jeton du premier dispositif (10),
- génération par la plateforme dématérialisée d'un cryptogramme en effectuant une dérivation de clé symétrique du troisième jeton généré par la plateforme dématérialisée avec l'identifiant du second dispositif (20) et/ou de l'utilisateur du second dispositif (20),
- acceptation de la transaction bancaire si les cryptogrammes sont identiques.

2. Procédé selon la revendication 1, **caractérisé en ce que** le message comprenant le cryptogramme signé avec le premier jeton est transféré à un terminal de point de vente qui interroge un serveur d'un établissement bancaire qui interroge à son tour la plateforme de paiement dématérialisé afin de vérifier le cryptogramme.

3. Procédé selon la revendication 2, **caractérisé en ce que** l'information prédéterminée indiquant que le premier jeton a été transféré par un tiers indique en outre que le compte de l'utilisateur du second dispositif (20) doit être débité.

4. Procédé selon la revendication 3, **caractérisé en ce que** l'information prédéterminée indiquant que le premier jeton a été transféré par un tiers indique en outre que le compte de l'utilisateur du second dispositif (20) doit être débité et que le compte de l'utilisateur du premier dispositif (10) doit être crédité.

5. Procédé selon la revendication 4, **caractérisé en ce que** l'information prédéterminée indiquant que le premier jeton a été transféré par un tiers indique en outre le montant de débit et du crédit.

6. Procédé selon l'une quelconque des revendications 1 à 5, **caractérisé en ce que** le procédé comporte entre outre l'étape, exécutée préalablement à l'étape de transfert par le second dispositif (20) au premier dispositif (10) d'un identifiant du second dispositif (20) et/ou de l'utilisateur du second dispositif (20), de création d'un canal sécurisé entre le premier dispositif (10) et le second dispositif (20) et **en ce que** l'identifiant du second dispositif (20) et le premier jeton sont transférés dans le canal sécurisé.

7. Système de fourniture de jeton dans un système d'émulation de carte hôte comportant un premier et un second dispositifs et une plateforme de paiement sécurisé, **caractérisé en ce que** le système comporte :
- des moyens de transfert par le second dispositif (20) au premier dispositif (10) d'un identifiant du second dispositif (20) et/ou de l'utilisateur du second dispositif (20),
- des moyens de réception du premier dispositif (10) par le second dispositif (20), d'un premier jeton et d'un identifiant du second dispositif (20) et/ou de l'utilisateur du second dispositif (20), le premier jeton étant une dérivation symétrique d'un second jeton du premier dispositif (10) avec l'identifiant du second dispositif (20) et/ou de l'utilisateur du second dispositif (20),
- des moyens de transfert par le second dispositif (20) d'un message comprenant un cryptogramme signé avec le premier jeton, l'identifiant du premier dispositif (10) et/ou de l'utilisateur du premier dispositif (10) et une information prédéterminée indiquant que le premier jeton a été transféré par un tiers,
- des moyens de réception par la plateforme de paiement dématérialisée du message,
- des moyens d'obtention par la plateforme de paiement dématérialisée d'informations relatives au premier dispositif (10) et/ou de l'utilisateur du premier dispositif (10) pour la génération d'un troisième jeton du premier dispositif (10),
- des moyens de génération par la plateforme dématérialisée d'un cryptogramme en effectuant une dérivation de clé symétrique du troisième jeton généré par la plateforme dématérialisée avec l'identifiant du second dispositif (20) et/ou de l'utilisateur du second dispositif (20),
- des moyens d'acceptation de la transaction bancaire si les cryptogrammes sont identiques.

8. Système selon la revendication 7, **caractérisé en ce que** les premiers et seconds dispositifs sont des téléphones mobiles intelligents.
